# EUROPEAN PATENT SPECIFICATION

(11) **EP 3 556 245 B1**
(45) Date of publication and mention of the grant of the patent: **06.09.2023**
(21) Application number: 19168365.5
(22) Date of filing: 10.04.2019
(51) Int. Cl.: A45D 34/00, A45D 34/02, A45D 34/04, A45D 40/00, B65D 25/00

(54) **CONTAINER OF A COSMETIC OR MEDICAL PRODUCT**
BEHÄLTER EINES KOSMETISCHEN ODER MEDIZINISCHEN PRODUKTS
RÉCIPIENT DE PRODUIT COSMÉTIQUE OU MÉDICAL

(30) Priority: 17.04.2018 IT 201800004619
(43) Date of publication of application: 23.10.2019
(73) Proprietor: Lumson S.p.A., 26010 Capergnanica (CR) (IT)
(72) Inventor: MORETTI, Matteo, 26013 Crema (CR) (IT)
(74) Representative: Vanosi, Adelio Valeriano

(56) References cited:
- EP-A1- 2 345 523
- EP-A1- 3 210 502
- EP-A1- 3 269 270
- WO-A1-2010/141479
- WO-A1-2015/089569
- GB-A- 2 554 093
- US-A1- 2008 110 774

## Description

### FIELD OF THE INVENTION

The present invention relates to a container of a cosmetic or medical product.

In particular, the invention refers to a container of a cosmetic or medical product such as a cream, a perfume, a product for make-up, serums, oils, foundations, lipsticks, mascaras, compacts, etc.

### BACKGROUND ART

Cosmetic or medical products are usually packaged in a container which protects the said products from external contamination until the opening and use thereof by a user.

For marketing purposes, the container may be inserted in a box which facilitates the storage thereof on shelves, on display to the consumers.

An RFID chip may be provided inside or outside the box, in a position which is usually hidden to the consumer, which is normally used solely as an anti-shoplifting device.

The RFID chip is deactivated in the security system at the place of sale, or in any case set so as not to signal a theft in the event thereof once the product has been duly paid for.

Alternatively, the chip is physically removed from the container.

RFID chips like the ones described above mainly fulfil an anti-shoplifting function and do not contain specific information about the product contained in the container. Furthermore, the said chips are easily removed from the product during use.

Patent n. EP2345523-A1, filed in the name of the same applicant, discloses a decorated container which may be associated with an airless pump. The container features a transparent casing inside which a decorative leaflet may be placed, which is visible through the casing (transparent plastic or glass bottle).

The said leaflet may be glued onto an inner wall of the container, in order to be stable. The leaflet may include a microchip, for example of the RFID type, which comprises data about the product dispensable.

The solution disclosed in the said document is effective. However, finding the chip from the outside of the container is difficult as, in addition to masking the inside of the container and the deformable bag, the presence of the decorative leaflet also masks the presence of the chip. EP3269270A discloses also a container with a RFID chip.

### SUMMARY OF THE INVENTION

The object of the present invention is to provide a container which highlights the presence of an RFID chip therewithin.

This and other objects are achieved by means of a container produced according to the technical teachings of the claims annexed hereto.

Advantageously, the invention allows user to accurately locate the position of the RFID microchip, by simply viewing the container from the outside.

### BRIEF DESCRIPTION OF THE FIGURES

Further characteristics and advantages of the invention will become clearer in the description of a preferred but not exclusive embodiment of the device, illustrated - by way of a non-limiting example - in the drawings annexed hereto, in which:
Figure 1 is a partially sectioned, simplified side view of the container according to the present invention;
Figure 1A is an appropriately enlarged, simplified detail of figure 1;
Figure 1B is a side view of the container in Figure 1, but not sectioned this time;
Figure 2 shows a possible variant of the container in Figure 1;
Figure 3 shows an exploded view of the container in Figure 2, but the exploded view also illustrates the embodiment in Figure 1, with the exception of the position of the microchip and an identifier;
Figure 3A shows a side view, not sectioned, of the container in Figure 3;
Figure 4 is a partially sectioned view of a variant of the container according to the present invention;
Figure 5 is an exploded view of the container in Figure 4;
Figure 6 is a partially sectioned view of a further variant of the container according to the present invention;
Figure 7 is a partially sectioned view of a variant of a still further container according to the present invention; and
Figure 8 is a partially sectioned view of a second still further variant of the container according to the present invention.

### DETAILED DESCRIPTION OF THE INVENTION

With reference to the figures stated, reference number 1 is used to denote, as a whole, a container.

Since different variants of the container are provided in the present description, denoted 1A, 1B, 1C, 1D, 1E, the said variants will be denoted in general using reference number 1.

Functionally similar components of the different versions of the container described herein will be denoted in general using the reference numbers without the letter (2, 3 etc), while when reference is made to a specific version of the container, the said components will be denoted using the said reference numbers followed by a letter (2A, 3A etc).

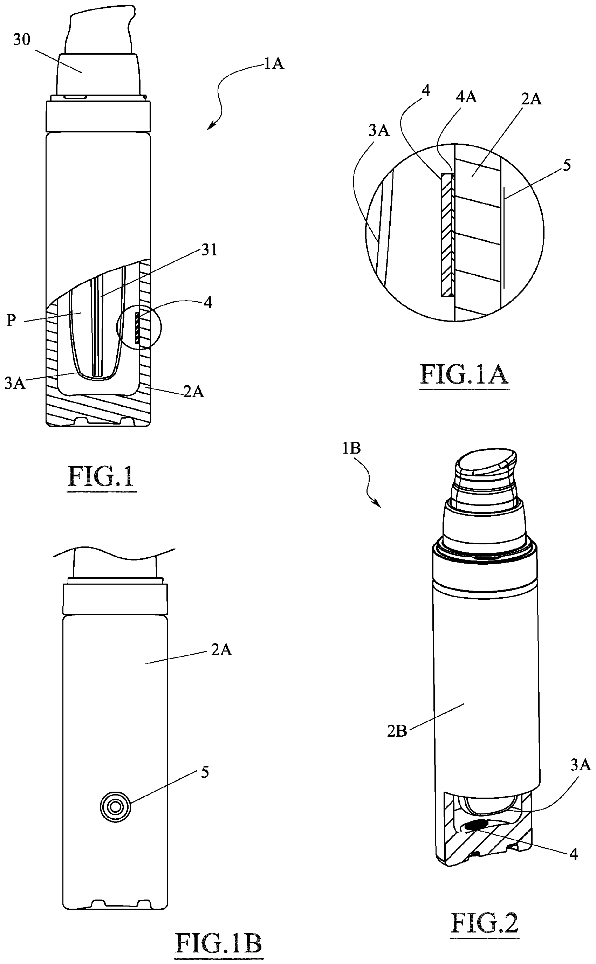

Initially, reference is be made to Figure 1. The said figure shows a container 1A of a cosmetic or medical product.

In the present text, the term "cosmetic or medical product" refers to a product which may be for toiletry purposes, a perfume, a make-up product, such as a foundation or a stick for lips etc, a beauty cream or medicinal cream, a suntan lotion, serums, oils, foundations, lipsticks, mascaras, compacts etc.

The container comprises an outer casing 2 inside which an element 3 is defined to contain, at least partially, the product P.

In Figure 1, the containment element is a deformable bag 3A, associated -with an airtight seal- with a hermetic manual pump 30 for dispensing the said product through a nozzle. Preferably, in this configuration, the product P contained inside the bag is a cream.

As can be seen partially in Figure 1, a support 31 (which guides the deformation of the bag which takes place as a consequence of the dispensing of the product) may be provided inside the deformable bag 3A. The support 31 is obviously optional.

An RFID chip 4 is secured to at least part of the casing 2, in a position which is inaccessible during normal use of the product by an end user.

As can clearly be seen from the enlargement in Figure 1A, the RFID chip 4 may be fastened stably, by means of the sticker 4A, to an internal side wall of the casing 2A. In this way, the RFID chip is positioned stably and any movement thereof within the casing 2A is prevented, even when the deformable bag 3A is partially empty or has collapsed, or in the presence of vibrations or sudden movement of the container.

As described, in the form illustrated, the RFID chip is fastened, by means of a sticker 4A, but obviously it is possible to use other methods, known in the state of the art, to position and fasten the said chip to a wall (or to another part of the casing), such as, for example, a spot of glue or a weld.

According to the invention, the casing has an identifier 5 of the presence and/or position of the RFID chip 4 in the container, so that a user can establish the presence and/or position of the RFID chip 4 simply by viewing the container from the outside.

In this way, preferably even before opening and using the container 1 for the first time, or after a certain period of time from the first use (the actual moment is irrelevant), the final user may position an RFID chip reader in proximity thereto and access the information contained therein.

The micro-chip (Consolidated Highly Integrated Processor), which is preferably of the RFID (i.e. radio-frequency identification) type (also known as RFID tag, which can be in either read-only or read/write mode) may contain a plurality of information items relating, for example, to the product contained in the container. In the chip 4, micro-images and/or coded information may be present for the purposes of product identification, storage, packaging, life (expiry) and dosage, or there may be specific links to remote connections where such information may be accessed, as well as any other information which may be useful or necessary for product use.

Once paired with the reader (and therefore electrically powered by radio), the RFID chip can transmit a coded or uncoded signal containing the information stored therein. By way of example, the reader may consist of any system capable of reading such information, such as a smartphone (using the integrated aerial), a tablet, a notebook, etc.

The RFID chip can also act as an access element for augmented reality systems, i.e. providing the possibility of increasing the user's sensorial perceptions by sending information which has been manipulated and conveyed electronically and would not be perceptible through the normal five senses.

Basically, the RFID chip acts, in practice, as all the applications that can be generated by manipulating the information contained in the chip and filtered by an electronic system.

The identifier 5 may have various configurations useful for the purpose and may be positioned externally to the casing 2 in a position corresponding to that of the RFID chip 4 (for example, directly facing the chip, through the wall, as in Figure 1A).

For this example (but this also applies to the other examples that will be described later), the identifier may be a print (produced, for example, by screenprinting) made externally to the casing, which may also be variously decorated in a conventional manner.

The print may also be produced inside the casing (if the said casing is transparent, and this is possible based on the configuration of the said casing 2).

Instead of or in addition to the print, the identifier 5 may include a groove and/or embossment on the casing. The embossment may be used to identify the presence and/or position of the chip in poorly lit environments or by the partially sighted.

The identifier 5 may also include an adhesive label (coloured, or on which a print is produced, which may also be embossed) which is applied externally to the casing.

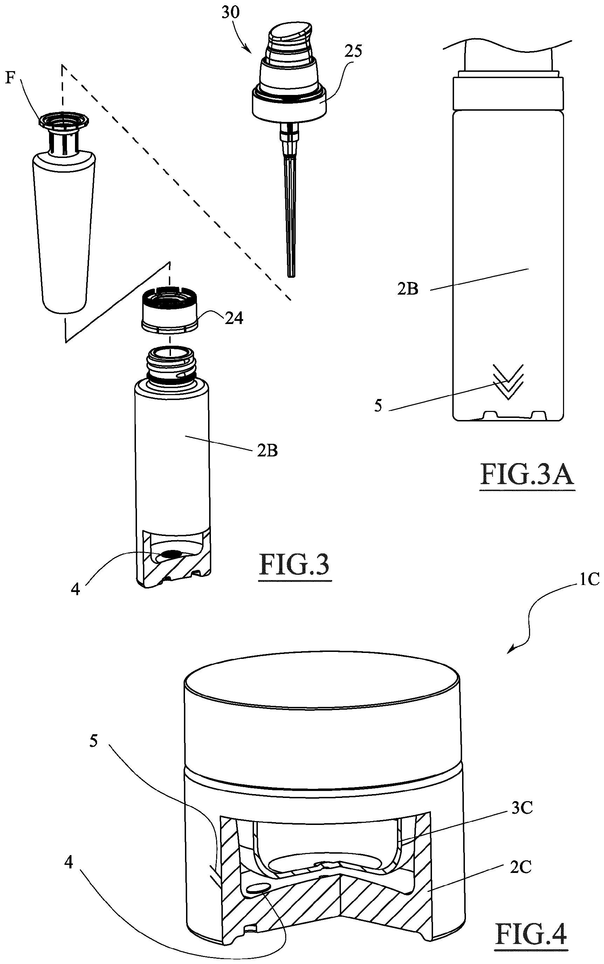

Obviously, the identifier may have any "visual" form. The example in Figure 1B shows concentric circles. Arrows may also be produced, as shown in Figure 3A, or any other form, which may also include text or written instructions, ideograms, etc.

Alternatively, the casing may have a vast opaque (i.e. not transparent) area, as a result of which it is not possible to see the inside of the casing, except in a transparent area (for example a window). In this case, the identifier 5 may be defined precisely by the transparent area in the casing which makes the RFID chip 4 visible, at least in part, from the outside of the container.

In the configuration described herein, as also in the other variants which will be described below, the product containment element 3 isolates the said product, preventing contact with the casing, and the RFID chip 4 is therefore positioned in a cavity defined between at least a part of said casing 2 and the containment element 3.

Moving on to the description of Figure 2, it should be noted that the said figure shows a container which is identical to that in Figure 1, with the exception of the position of the RFID chip 4 (which is simply placed on the bottom and is also - optionally - free to move and secured to the casing 2A solely through the conformation thereof and the bag 3A). Obviously, the indicator also assumes a different configuration from that shown in Figure 1. In this case there are arrows (possibly accompanied by further written instructions, but not shown) which indicate the bottom of the container to the user, which must be brought close to the reader for RFID chip reading purposes. In this, as in the subsequent embodiments, the indicator 5 may be a print, a label, or an embossment, as already described above etc.

In its design, the container 1B is identical to that in Figure 1. Both, therefore, comprise a casing 2A, 2B inside which the deformable bag 3A is present. The bag is made of a single piece of material and comprises a flange F which, once fixed to the container, is sandwiched between a ring nut screwed to a neck of the casing (2A, 2B) to which a skirt 25 is snap-fastened, the said skirt extending from the pump body 30 (or from a piece which is integral therewith).

The bag 3A, in this case, may be folded before being inserted into the casing 2A, 2B.

The configuration in Figure 4 is conceptually similar to that in Figure 3. In this case the RFID chip is applied to a 'pot' or vessel equipped with a casing 2C which, like the casing 2A of the previous embodiment, may be made for example of glass, painted internally or externally, but also of transparent or opaque (i.e. not transparent) plastic.

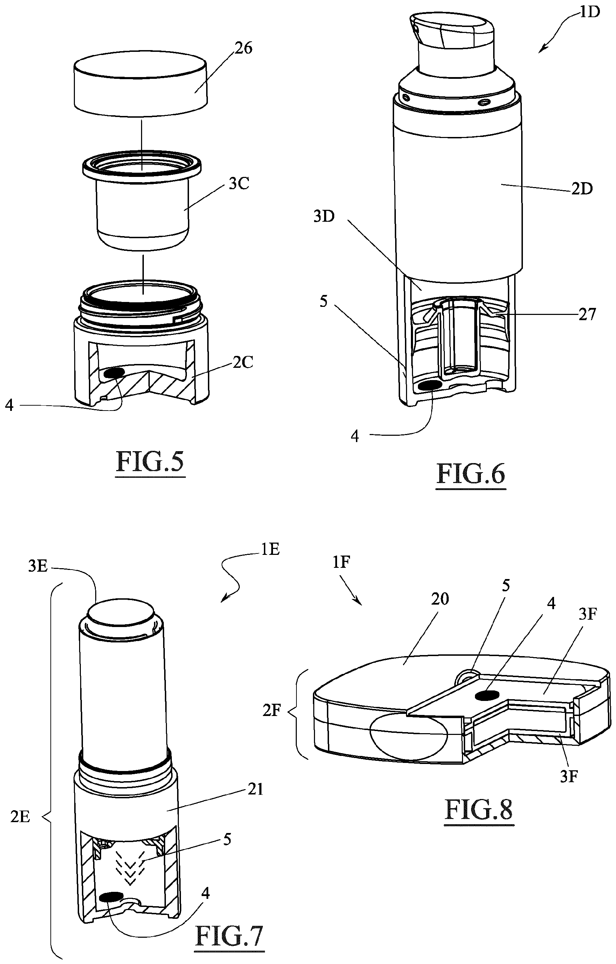

In this case, the containment element is a rigid plastic body 3C (therefore with a defined shape) which is inserted (as seen in Figure 5) inside the casing and covers the said interior thereof (leaving a cavity). The advantage of such configuration, and likewise of the previous ones, is that the product is contained in the body 3 and does not come into contact with the inside of the casing 2 (which, as already mentioned, may therefore also be painted using a material which is not compatible with the product).

The body 3C is fastened, in correspondence with a flange thereof, to the casing 2C, preferably with a snap fastening, so as not to be removable from the container during normal use of the product.

To complete the description of this embodiment, it must be specified that the casing features a threaded neck, to which a fastening 26 may be associated.

Also in this case, the RFID chip 4 may be simply placed on the bottom of the container (as shown in Figure 5) or preferably constrained to the bottom or to a side wall, by means of a sticker 4A or other suitable means.

Depending on the position of the RFID chip inside the casing, a similar configuration of the indicator 5 to that in Figure 3 may be used, or to that in Figure 1B, or another suitable one may be used.

In the embodiment in Figure 6, the container is endowed with a movable bottom (or piston 27) which slides in a sealed manner along the inner walls of the casing 2D. Also in this case an airless pump 30 is present and the system's construction solution is conventional. For this reason, it will not be described any further.

The RFID chip 4 is positioned in the cavity created between the bottom of the casing 2D and the piston, either simply resting or glued to the bottom of the container.

In this case, the positioning of the RFID chip may only be adjacent to the bottom of the container, to allow free movement of the piston to the stroke limit thereof. Consequently, the indicator 5 will be also stamped on the bottom of the container, or on one of the sides thereof, as shown partially in Figure 6.

In the configuration of Figure 7, the product is, for example, a stick for lips, which is fixed at its base to the containment element 3E. The containment element 3E is movable axially with respect to the outer casing 2E, to allow effective use of the stick.

In this case, the RFID chip 4 is positioned in correspondence with a handle 21 of the lipstick machine that holds the casing containment element 3E, always in a position which is inaccessible during normal use of the device.

A rotation of the handle 21, that is part of the outer casing 2E, may result in an axial movement of the containment element 3E.

Also in this case, the chip 4 may be advantageously fastened to a bottom of the handle (Figure 7) or to a wall thereof.

In the variant in Figure 8, the container is advantageously used for a compact or a cast make-up product.

Although the dimensions differ, the said variant is constructively similar to the container in Figure 4 and is formed of a casing comprising a lid.

Internally, the lid 20 comprises a rigid plastic covering 3F which, even if not in direct contact with the product, acts as a containment element thereof, since the said covering isolates the said product from the casing 2F, especially in correspondence with the lid 20.

In this case, the RFID chip may be positioned in the cavity between the lid 20 and the covering 2F.

As before, the chip 4 may advantageously be fastened to the lid 20 of the casing 2F or to the covering 3F which is part of the containment element.

The indicator will then be placed on the casing (or rather on the lid 20 thereof, as partially visible in Figure 8).

From the embodiments described, which are just some of the many embodiments possible, it should be noted that the chip 4 is preferably positioned inside a cavity created by the components constituting the container and isolated from the (bulk) product.

The cavity may consist, as seen, of the space included - in the airless systems - between the pouch and the bottle or between the piston and the bottle. In other configurations, the said cavity may consist of the space between two rigid elements.

The chip 4 can obviously assume various forms (with a base which is square, round, rectangular, etc.) and dimensions generally between 0.5 cm and 3 cm.

The chip 4 may be positioned on the bottom of the bottle, or on the walls, either resting thereupon or fastened to the casing (or on the containment element) by means of an adhesive support. Application by means of an adhesive support allows the chip to be positioned in a specific area of the bottle and remain in that position stably.

The previous examples show an RFID chip 4 secured inside a cavity formed between the casing 2 and the containment element 3. Obviously, the RFID chip 4 can be simply housed freely in the cavity, or secured or fastened to the containment element 3 (for example facing or opposite the casing 2) or again, as described, secured or fastened to the casing 2 (facing or opposite the containment element 3).

Various embodiments of the innovation have been disclosed herein, but further embodiments may also be conceived using the same innovative concept, not departing from the scope of the invention as disclosed in the appended claims.

## Claims

1. Container (1) of a cosmetic or medical product, comprising an outer casing (2) inside which an element (3) is housed to at least partially contain the product (P), to at least a part of the casing (2) or of the element (3) being constrained, in an inaccessible position during the normal use of the product by an end user, an RFID chip (4), wherein the outer casing (2) has an identifier (5) of the position of the RFID chip (4) in the container (1), so that a user can univocally identify the position of the RFID chip (4) simply by viewing the outer casing (2) of the container (1), the position of the RFID chip (4) being used by the user tc position an RFID chip reader that is a smartphone, a tablet or a notebook in proximity of the RFID chip (4) and access the information contained therein, the product containment element (3) isolating the product from contact with the casing, the RFID chip (4) being positioned in a gap defined between at least a part of said casing (2) and the containment element (3).

2. Container (1) according to claim 1, in which the identifier (5) is positioned externally to the outer casing (2) in a position corresponding to that of the RFID chip (4).

3. Container (1) according to claim 1, in which the identifier is positioned externally to the outer casing (2) and indicates the position of the RFID chip (4) inside the casing (2).

4. Container (1) according to one or more of the preceding claims, in which the identifier is a print made externally of the outer casing (2).

5. Container according to one or more of the preceding claims, in which the identifier (5) comprises an incision and/or a relief on the outer casing (2).

6. Container (1) according to one or more of the preceding claims, in which the identifier (5) is an adhesive label applied externally to the outer casing (2) .

7. Container (1) according to claim 1, wherein the outer casing (2) is opaque and comprises a transparent zone, the identifier (5) being defined by the transparent area of the outer casing (2) which makes at least partially visible the RFID chip (4) from the outside of the container.

8. Container according to claim 1, wherein the RFID chip (4) is positioned between a lid (20) forming part of the outer casing (2), and an inner lining of the lid (20) .

9. Container according to claim 1, wherein the outer casing (2) is a lipstick casing (2E), and the RFID chip (4) is positioned inside a handle (21) of the lipstick casing (2E).

## Patentansprüche

1. Behälter (1) für ein kosmetisches oder medizinisches Produkt, umfassend ein äußeres Gehäuse (2), innerhalb dessen ein Element (3) untergebracht ist, um das Produkt (P) zumindest teilweise zu enthalten, wobei zumindest ein Teil des Gehäuses (2) oder des Elements (3) in einer unzugänglichen Position während der normalen Verwendung des Produkts durch einen Endbenutzer an einen RFID-Chip (4) gebunden ist,
wobei das äußere Gehäuse (2) einen Identifizierer (5) der Position des RFID-Chips (4) in dem Behälter (1) aufweist, sodass für einen Benutzer die Position des RFID-Chips (4) eindeutig identifizierbar ist, indem er einfach das äußere Gehäuse (2) des Behälters (1) betrachtet, wobei die Position des RFID-Chips (4) durch die Verwendung verwendet wird, um ein RFID-Chip-Lesegerät zu positionieren, das aus einem Smartphone, einem Tablet oder einem Notebook in der Nähe des RFID-Chips (4) besteht, und auf die darin enthaltenen Informationen zuzugreifen, wobei das Produktkapselungselement (3) das Produkt vom Kontakt mit dem Gehäuse isoliert und der RFID-Chip (4) in einem Spalt positioniert wird, der zwischen mindestens einem Teil des Gehäuses (2) und dem Kapselungselements (3) definiert ist.

2. Behälter (1) nach Anspruch 1, bei dem der Identifizierer (5) außerhalb des äußeren Gehäuses (2) in einer Position angeordnet ist, die der des RFID-Chips (4) entspricht.

3. Behälter (1) nach Anspruch 1, bei dem der Identifizierer außerhalb des äußeren Gehäuses (2) angeordnet ist und die Position des RFID-Chips (4) innerhalb des Gehäuses (2) angibt.

4. Behälter (1) nach einem oder mehreren der vorhergehenden Ansprüche, bei dem der Identifizierer ein Aufdruck ist, der außerhalb des äußeren Gehäuses (2) angebracht ist.

5. Behälter nach einem oder mehreren der vorhergehenden Ansprüche, bei dem der Identifizierer (5) einen Einschnitt und/oder ein Relief auf dem äußeren Gehäuse (2) umfasst.

6. Behälter (1) nach einem oder mehreren der vorhergehenden Ansprüche, bei dem der Identifizierer (5) ein außen an das äußere Gehäuse (2) angebrachtes Klebeetikett ist.

7. Behälter (1) nach Anspruch 1, wobei das äußere Gehäuse (2) lichtundurchlässig ist und einen transparenten Bereich umfasst, wobei der Indentifizierer (5) durch den transparenten Bereich des äußeren Gehäuses (2) definiert ist, der den RFID-Chip (4) von der Außenseite des Behälters zumindest teilweise sichtbar macht.

8. Behälter nach Anspruch 1, wobei der RFID-Chip (4) zwischen einem Deckel (20), der Teil des des äußeren Gehäuses (2) bildet, und einer Innenauskleidung des Deckels (20) angeordnet ist.

9. Behälter nach Anspruch 1, wobei das äußere Gehäuses (2) eine Lippenstifthülle (2E) ist und der RFID-Chip (4) innerhalb eines Griffs (21) der Lippenstifthülle (2E) angeordnet ist.

## Revendications

1. Récipient (1) d'un produit cosmétique ou médical, comprenant une enveloppe externe (2) à l'intérieur de laquelle est logé un élément (3) destiné à contenir au moins partiellement le produit (P), jusqu'à au moins une partie de l'enveloppe (2) ou de l'élément (3) qui est contraint, dans une position inaccessible lors de l'utilisation normale du produit par un utilisateur final, une puce RFID (4),
ladite enveloppe externe (2) comportant un identifiant (5) de la position de la puce RFID (4) dans le récipient (1), de sorte qu'un utilisateur puisse identifier de manière univoque la position de la puce RFID (4) simplement en visualisant l'enveloppe externe (2) du récipient (1), la position de la puce RFID (4) étant utilisée par l'utilisateur pour positionner un lecteur de puce RFID qui est un smartphone, une tablette ou un ordinateur portable à proximité de la puce RFID (4) et accéder aux informations qu'elle contient, l'élément de confinement de produit (3) isolant le produit du contact avec l'enveloppe, la puce RFID (4) étant positionnée dans un espace défini entre au moins une partie de ladite enveloppe (2) et l'élément de confinement (3).

2. Récipient (1) selon la revendication 1, ledit identifiant (5) étant positionné à l'extérieur de l'enveloppe externe (2) dans une position correspondant à celle de la puce RFID (4).

3. Récipient (1) selon la revendication 1, ledit identifiant étant positionné à l'extérieur de l'enveloppe externe (2) et indiquant la position de la puce RFID (4) à l'intérieur de l'enveloppe (2).

4. Récipient (1) selon l'une ou plusieurs des revendications précédentes, ledit identifiant étant une empreinte réalisée à l'extérieur de l'enveloppe externe (2).

5. Récipient selon l'une ou plusieurs des revendications précédentes, ledit identifiant (5) comprenant une incision et/ou un relief sur l'enveloppe externe (2).

6. Récipient (1) selon l'une ou plusieurs des revendications précédentes, ledit identifiant (5) étant une étiquette adhésive appliquée sur l'extérieure de l'enveloppe externe (2).

7. Récipient (1) selon la revendication 1, ladite enveloppe externe (2) étant opaque et comprenant une zone transparente, ledit identifiant (5) étant défini par la surface transparente de l'enveloppe externe (2) qui rend au moins partiellement visible la puce RFID (4) depuis l'extérieur du récipient.

8. Récipient selon la revendication 1, ladite puce RFID (4) étant positionnée entre un couvercle (20) faisant partie de l'enveloppe externe (2), et un revêtement intérieur du couvercle (20).

9. Récipient selon la revendication 1, ladite enveloppe externe (2) étant une enveloppe de rouge à lèvres (2E) et ladite puce RFID (4) étant positionnée à l'intérieur d'une poignée (21) de l'enveloppe de rouge à lèvres (2E).
